# EUROPEAN PATENT APPLICATION

(11) **EP 4 741 133 A1**
(43) Date of publication of application: **13.05.2026**
(21) Application number: 24835729.5
(22) Date of filing: 14.02.2024
(51) Int. Cl.: B29C 45/60

(54) **SCREW FOR INJECTION MOLDING APPARATUS AND INJECTION MOLDING APPARATUS**

(30) Priority: 06.07.2023 JP 2023111086
(71) Applicant: The Japan Steel Works, Ltd., Tokyo 141-0032 (JP)
(72) Inventor: KUNIHIRO, Daisuke, Tokyo 141-0032 (JP); CHIBA, Hideki, Tokyo 141-0032 (JP)
(74) Representative: Simmons & Simmons LLP (Munich)
(86) International application number: PCT/JP2024/005054
(87) International publication number: WO 2025/009206

(57) **Abstract**

A screw (30) for an injection molding apparatus is for use in an injection molding apparatus. The screw (30) has: a shaft (31) that extends from a supply part to a measurement part; a groove (32) that is continuously formed in a spiral shape on the shaft (31); and a rib-like flight (33) that is formed between the grooves (32) adjacent to each other in the extension direction of the shaft (31). In the screw (30), the width of the flight (33) in the supply part is greater than the width of the flight (33) in the measurement part, the pitch of the flight (33) in the supply part is smaller than the pitch of the flight (33) in the measurement part, and the depth of the groove (32) in the supply part is greater than the depth of the groove (32) in the measurement part.

## Description

### Technical Field

The present disclosure relates to a screw for injection molding apparatus and an injection molding apparatus.

### Background Art

Various proposals have been disclosed regarding the shape of a screw in an in-line screw type injection molding apparatus.

For example, an injection molding apparatus including a screw defined by a first region having a constant flight pitch, a constant groove width, and a constant groove depth and a second region having a constant flight pitch, a groove depth that becomes shallower, and a groove width that becomes wider is disclosed (Patent Literature 1).

### Citation List

### Patent Literature

Patent Literature 1: Japanese Unexamined Patent Application Publication No. Publication No. 2011-224801

### Summary of Invention

However, in the above-described technique, the flight pitch in the tip part is determined by the shape of the screw in the region where the raw material resin is received. Therefore, in the case where a high pressure is applied to the resin at the tip of the screw, it is difficult to perform well-balanced control the backflow of the resin due to this pressure.

The present disclosure has been made in order to solve such a problem, and an object of the present disclosure is to provide a screw for injection molding apparatus or the like adapted to perform desired molding optimally.

A screw for an injection molding apparatus according to the present disclosure is a screw for use in an injection molding apparatus configured to receive a raw material in a supply unit on an upstream side of the screw, convey the raw material to a measurement unit while applying heat to the raw material, and inject the melted raw material into a mold disposed on a downstream side of the measurement unit. The screw for an injection molding apparatus includes: a shaft extending from the supply unit across to the measurement unit; grooves formed continuously and spirally in the shaft; and a flight having a rib-shape formed between the grooves that are adjacent to each other in an extension direction of the shaft. Regarding the screw, a width of the flight in the supply unit is wider than a width of the flight in the measurement unit, a pitch of the flight in the supply unit is smaller than a pitch of the flight in the measurement unit, and a depth of the grooves in the supply unit is deeper than a depth of the grooves in the measurement unit.

An injection molding apparatus according to the present disclosure includes: a heated cylinder; and a screw rotatably and protrudably-and-retractably housed in the heated cylinder. The injection molding apparatus is configured such that the screw is rotated to knead and plasticize a raw material received in a supply unit, and the screw is caused to protrude-and-retract to thereby inject the plasticized raw material from a measurement unit toward a mold. The screw includes: a shaft extending from the supply unit across to the measurement unit; grooves formed continuously and spirally in the shaft; and a flight having a rib-shape formed between the grooves that are adjacent to each other in an extension direction of the shaft. In the screw, a width of the flight in the supply unit is wider than a width of the flight in the measurement unit, a pitch of the flight in the supply unit is smaller than a pitch of the flight in the measurement unit, and a depth of the grooves in the supply unit is deeper than a depth of the grooves in the measurement unit.

According to the present disclosure, it is possible to provide a screw for an injection molding apparatus and an injection molding apparatus adapted to perform desired molding optimally.

### Brief Description of Drawings

Fig. 1 is an overall structural view of an injection molding apparatus according to an embodiment;
Fig. 2 is a partially enlarged view of a screw according to an embodiment; and
Fig. 3 is an external view for describing the shape of a screw.

### Description of Embodiments

Hereinafter, the present disclosure will be described through embodiments of the disclosure, but the disclosure as claimed is not limited to the following embodiments. In addition, all of the configurations described in the embodiments are not necessarily indispensable as means for solving the problem. For clarity of explanation, the following descriptions and drawings are omitted and simplified as appropriate. In each of the drawings, the same reference symbols are assigned to the same elements, and duplicate descriptions are omitted as necessary.

### < Embodiment >

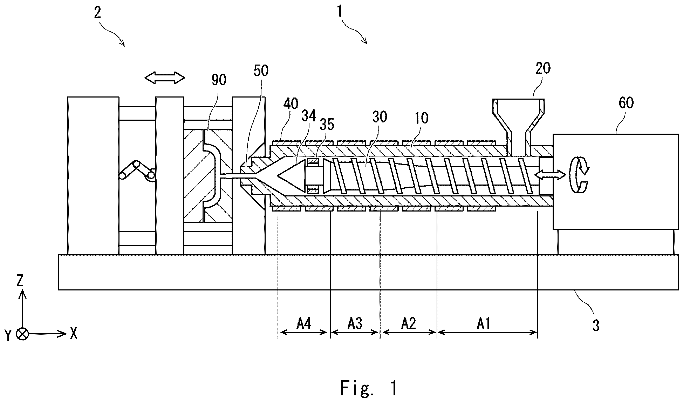

Hereinafter, an embodiment of the present disclosure will be described with reference to the drawings. Fig. 1 is an overall structural view of an injection molding apparatus 1 according to the embodiment. A part of the injection molding apparatus 1 shown in Fig. 1 is shown as a cross-sectional view for ease of understanding.

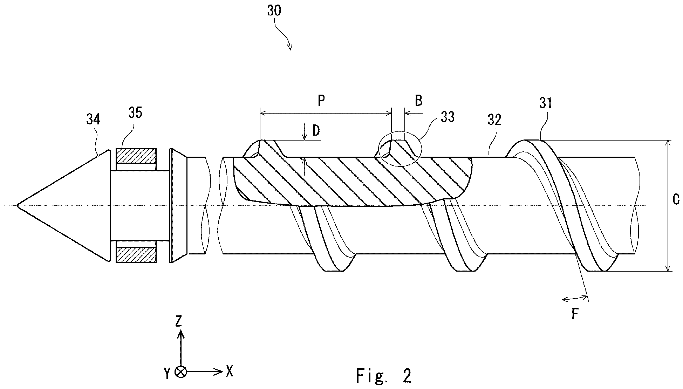

Fig. 1 shows a right-handed rectangular coordinate system for the sake of convenience in describing the positional relationship of the structural elements. The Z-axis positive direction coincides with the vertical upward direction. The XY plane coincides with the horizontal plane. In Fig. 2 and the subsequent drawings, in the case where a Cartesian coordinate system is illustrated, the X-axis, Y-axis, and Z-axis directions of Fig. 1 coincide with the X-axis, Y-axis, and Z-axis directions of these Cartesian coordinate systems, respectively.

The injection molding apparatus 1 is used, for example, as one of the components of a molding system for manufacturing a desired molded article from a raw material. The raw material is, for example, resin. The resin may contain additives such as fibers and beads. The raw material may be, for example, metal powder other than resin.

The injection molding apparatus 1 is fixed on a base 3 together with a mold clamping apparatus 2 and controlled to cooperate with the mold clamping apparatus 2. The injection molding apparatus 1 is connected to the mold clamping apparatus 2 so as to supply plasticized raw material. It should be noted that plasticization may be rephrased as melting of the raw material. The mold clamping apparatus 2 holds a mold 90. The injection molding apparatus 1 receives the raw material in the form of a pellet, plasticizes the received raw material, and injects it into the mold 90. The injection molding apparatus 1 includes a cylinder 10, a hopper 20, a screw 30, a heater 40, a nozzle 50, and a drive block 60 as main components.

The cylinder 10 is a cylindrical member extending in the horizontal direction (the X-axis direction). The cylinder 10 is connected to the hopper 20 on the upstream side (the X-axis positive-side) and configured to receive the raw material from the hopper 20. The hopper 20 is configured to receive and retain the raw material and supply the retained raw material to the cylinder 10 as appropriate. The cylinder 10 may be referred to as a heating cylinder.

The cylinder 10 is also configured to house the screw 30 rotatably and protrudably-and-retractably. The cylinder 10 is connected to the drive block 60, the part of the drive block 60 to which the cylinder is connected being on further upstream side with respect to the part to which the hopper 20 is connected. The drive block 60 includes a driving apparatus for causing the screw 30 to rotate and protrude-and-retract. By rotating, the screw 30 conveys the raw material received via the hopper 20 to the downstream side (the X-axis negative-side) while kneading it.

The tip of the cylinder 10 on the downstream (the tip on the X-axis negative-side) is gradually thinned, and the nozzle 50 is formed. The nozzle 50 is set to be able to inject the raw material conveyed to the tip thereof by the screw 30. The nozzle 50 is fitted in a recessed part formed in a fixed plate of the mold clamping apparatus 2. The screw 30 is driven by the drive block 60 and moves from the upstream side to the downstream side. Thus, the injection molding apparatus 1 extrudes the raw material retained at the tip of the cylinder 10 from the nozzle 50 to the mold 90.

The screw 30 is rotatably and protrudably-and-retractably housed in the cylinder 10 along the extension direction. The rotational motion performed by the screw 30 herein refers to a motion of rotating in the extension direction of the cylinder 10 (about the Y-axis). The protruding-and-retracting motion performed by the screw 30 herein refers to a motion of moving from the upstream to the downstream (the X-axis negative-side) and a motion of moving from the downstream to the upstream (the X-axis positive-side).

The screw 30 is connected to the drive block 60 on the upstream side, and performs the rotational motion and the protruding-retracting motion in accordance with the driving apparatus of the drive block 60. The screw 30 rotates to convey the raw material received via the hopper 20 to the downstream side. The screw 30 also plasticizes the raw material while conveying it.

Furthermore, the screw 30 moves to the downstream side to thereby extrude the raw material conveyed downstream of the cylinder 10 from the nozzle 50 to the outside of the injection molding apparatus 1. After the raw material is extruded, the screw 30 rotates to thereby convey the raw material downstream while itself moves upstream. Thus, the screw 30 retains the plasticized raw material on the downstream side of the cylinder 10 again.

In order to realize the above function, the screw 30 can be divided into a supply unit A1, a compression unit A2, and a measurement unit A3 from the upstream side along the extension direction. That is, the screw 30 receives the raw material at the supply unit A1 and conveys the received raw material to the downstream side. In the compression unit A2, the screw 30 plasticizes the raw material received from the supply unit A1 by compression and conveys the plasticized raw material downstream of the measurement unit A3. In the measurement unit A3, the screw 30 conveys the plasticized raw material to the downstream side of the measurement unit A3.

The screw 30 further includes a screw head part A4 on the downstream side of the measurement unit A3. The screw head part A4 includes a head 34 and a ring 35. The head 34 is a conical member disposed at the tip of the screw 30. The head 34 approaches the nozzle 50 as the screw 30 injects the raw material. As a result, the raw material retained on the downstream side of the head 34 is extruded from the nozzle 50 toward the mold 90. The ring 35 is an annular member for suppressing backflow of the plasticized raw material in a region between the head 34 and the measurement unit.

The heater 40 is a heating device disposed along the extension direction of the cylinder 10 on the outer periphery of the cylinder 10. The heater 40 is, for example, a sheath heater or a ceramic heater. The heater 40 may use a heating medium such as oil. The heater 40 may be divided into a plurality of segments along the extension direction of the cylinder 10. In this case, the heater 40 has a structure in which the heating temperature can be set for each segment. The heater 40 can be configured to apply heat to the nozzle 50 part as well.

The drive block 60 is connected to the screw 30 and is configured to rotary drive the screw 30 and linearly drive the screw 30. Therefore, the drive block 60 includes a motor for rotating the screw 30 and a motor for causing the screw 30 to protrude-and-retract.

Next, the configuration of the screw 30 will be described with reference to Fig. 2. Fig. 2 is a partially enlarged view of the screw 30 according to the embodiment. The screw 30 shown in Fig. 2 is partially shown as a sectional view for ease of understanding. The main configuration of the screw 30 includes a shaft 31, grooves 32, a flight 33, and the head 34. The screw 30 has the ring 35 at a part adjacent to the head 34.

The shaft 31 extends from the supply unit across to the measurement unit. The diameter C of the shaft 31 is set such that the screw can performs its motions without causing any significant rattling with respect to the bore of the cylinder 10. The grooves 32 are formed continuously and spirally in the shaft 31. The flight 33 is part having a rib-shape formed between the grooves 32 that are adjacent to each other in the extension direction of the shaft 31.

Here, the depth D of a groove 32 is the depth from the outer diameter surface of the shaft 31 to the bottom surface of that groove 32. The width B of the flight 33 is the length of the part corresponding to the outer diameter surface of the shaft 31 in the cross section passing through the center line of the shaft 31. The width B of the flight 33 may be the length of the screw 30 at the top of the flight 33 in the extension direction. The pitch P of a flight 33 is the pitch of a flight 33 and an adjacent flight 33 in the extension direction of the screw 30. The pitch of the flight 33 can be rephrased as the pitch of the grooves 32. The depth D of the grooves 32, the width B of the flight 33, and the pitch P of the flight 33 are of different dimensions depending on the position of the screw 30.

Incidentally, the angle F between the flight 33 from the supply unit to the measurement unit of the screw 30 according to the present embodiment and the screw shaft orthogonal cross-section (cross-section orthogonal to the central axis of the screw 30) is set within the range of 16 to 26 degrees.

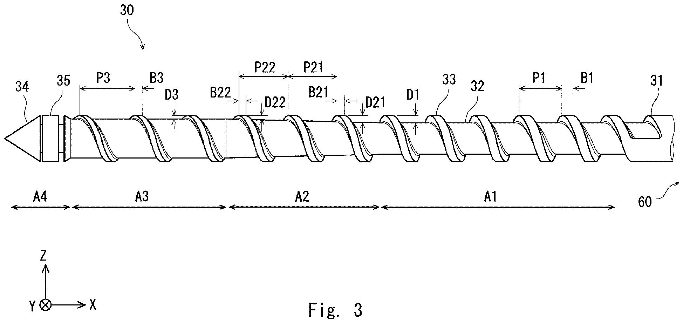

Next, specific features of the shape of each part of the screw 30 will be described with reference to Fig. 3. Fig. 3 is an external view for describing the shape of a screw. The screw 30 shown in Fig. 3 is a part housed in the cylinder 10. The screw 30 is connected to the drive block 60 on the X-axis positive-side in Fig. 3. However, Fig. 3 does not show the connection part of the drive block 60.

The reference symbols shown in Fig. 3 indicating the depth of the grooves 32 of the screw 30, the width of the flight, and the flight pitch are reference symbols shown in Fig. 2 followed by numbers. This is to indicate that each of these parts has different dimensions, since the dimensions of each part vary from position to position. For example, the grooves 32 in the supply unit A1 have a depth D1, and the grooves 32 in the measurement unit A1 have a depth D3.

Based on the above, the shape of the screw 30 shown in Fig. 3 will be described. In the screw 30, the width B1 of the flight 33 in the supply unit A1 is wider than the width B3 of the flight in the measurement unit A3. In other words, the width B3 of the flight 33 in the measurement unit A3 is narrower than the width B1 of flight in the supply unit A1.

More specifically, the width B3 of the flight 33 in the measurement unit A3 is 27% to 60% of the width B1 of the flight 33 in the supply unit A1.

The pitch P1 of the flight 33 in the supply unit A1 is smaller than the pitch P3 of the flight 33 in the measurement unit A3.

More specifically, the pitch P3 of the flight 33 in the measurement unit A3 is 110% to 170% of the pitch P1 of the flight 33 in the supply unit A1.

The depth D1 of the grooves 32 in the supply unit A1 is deeper than the depth D3 of the grooves 32 in the measurement unit A3.

Alternatively, the cross-sectional area (D1× (P1 - B1)) of the grooves 32 in the supply unit A1 parallel to the extension direction is 100 to 150% of the cross-sectional area (D3× (P3 - B3)) of the grooves 32 in the measurement unit A3.

The grooves 32 of the screw 30 are formed such that the grooves in the compression unit A2 gradually shallow from the supply unit A1 toward the measurement unit A3. That is, in the compression unit A2 shown in Fig. 3, the depth D22 of the groove 32 on the side relatively close to the measurement unit A3 is shallower than the depth D21 of the groove 32 on the side relatively close to the supply unit A1.

The flight 33 in the compression unit A2 is formed such that the width thereof gradually narrows from the upstream side to the downstream side. That is, for example, in the compression unit A2, the width B22 of the flight on the downstream side is narrower than the width B21 of the flight on the upstream side.

The flight in the compression unit is formed such that the pitch thereof gradually widens from the upstream side to the downstream side. That is, for example, in the compression unit A2, the pitch P22 of the flight on the downstream side is wider than the pitch P21 of the flight on the upstream side.

The screw 30 has been described above. As described above, the width B and the pitch P of the flight 33 in the screw 30 are changed along the extension direction. In the screw 30, the depth D of the grooves 32 may also be changed along the extension direction. Therefore, the shape and the cross-sectional area of the grooves 32 in the screw 30 are defined by three parameters of the width B of the flight 33, the pitch P of the flight 33, and the depth D of the grooves 32.

By the way, in the case where the width B of the flight 33 is kept constant and the pitch P is increased from the upstream side to the downstream side, the lead angle of the flight 33 in the measurement unit A3 is relatively large compared to that of the screw 30 described above. In such a screw with a constant flight width, the raw material tends to flow back into the measurement unit A3 in supplying the raw material to the downstream side of the measurement unit A3 in the injection molding apparatus 1.

On the other hand, in the case where the pitch P of the flight 33 is kept constant and the width B is narrowed from the upstream side to the downstream side, the compression ratio (S1/S2), which is the ratio between the cross-sectional area S1 of the grooves 32 in the supply unit A1 and the cross-sectional area S2 of the grooves 32 in the measurement unit A3, becomes higher as compared with the screw 30 described above. That is, in a screw having a constant flight pitch, the shear heat tends to rise due to the high compression ratio, and the raw material is apt to deteriorate accordingly.

In the screw 30 according to the present disclosure, compared with the screw with a constant flight width described above, the cross-sectional area of the grooves 32 can be increased while suppressing increase in the pitch P of the flight 33 in the measurement unit A3. Therefore, the screw 30 can suppress the backflow of the raw material in the case where the pressure of the raw material increases in the region from the measurement unit A3 to the head part A4. Alternatively, the screw 30 can suppress decrease in the flow rate of the raw material conveyed to the tip side of the screw in the case where the pressure of the raw material increases in the region from the measurement unit A3 to the head part A4 of screw.

In addition, the screw 30 can suppress the compression ratio to be low compared to that of the screw having a constant flight pitch. Therefore, the screw 30 can suppress the deterioration of the raw material. Moreover, by performing molding with a relatively low compression ratio, the screw 30 can suppress deterioration in the quality such as wear and breakage of the flight.

According to the above-described embodiments, it is possible to provide a screw for an injection molding apparatus and an injection molding apparatus adapted to perform desired molding optimally.

Although the present disclosure has been described with reference to the above-described embodiments, the present disclosure is not limited by the above. Various modifications may be made to the structure and details of the present disclosure within the scope of the disclosure as may be understood by those skilled in the art.

### Industrial Applicability

The present disclosure is available for an in-line screw injection molding apparatus.

This application claims priority based on Japanese Patent Application No. 2023-111086, filed on July 6, 2023, and is incorporated herein in its entirety.

### Reference Signs List

- 1: INJECTION MOLDING APPARATUS
- 2: MOLD CLAMPING APPARATUS
- 3: BASE
- 10: CYLINDER
- 20: HOPPER
- 30: SCREW
- 31: SHAFT
- 32: GROOVE
- 33: FLIGHT
- 34: HEAD
- 35: RING
- 40: HEATER
- 50: NOZZLE
- 60: DRIVE BLOCK
- 90: MOLD

## Claims

1. A screw for use in an injection molding apparatus configured to receive a raw material in a supply unit on an upstream side of the screw, convey the raw material to a measurement unit while applying heat to the raw material, and inject the melted raw material into a mold disposed on a downstream side of the measurement unit, the screw comprising:
a shaft extending from the supply unit across to the measurement unit;
grooves formed continuously and spirally in the shaft; and
a flight having a rib-shape formed between the grooves that are adjacent to each other in an extension direction of the shaft,
wherein
a width of the flight in the supply unit is wider than a width of the flight in the measurement unit,
a pitch of the flight in the supply unit is smaller than a pitch of the flight in the measurement unit, and
a depth of the grooves in the supply unit is deeper than a depth of the grooves in the measurement unit.

2. The screw for the injection molding apparatus according to claim 1, wherein the width of the flight in the measurement unit is 40% of the width of the flight in the supply unit.

3. The screw for the injection molding apparatus according to claim 1, wherein the pitch of the flight in the measurement unit is 140% of the pitch of the flight in the supply unit.

4. The screw for the injection molding apparatus according to any one of claims 1 to 3, wherein a cross-sectional area of the grooves in the supply unit parallel to the extension direction is 100 to 150% of a cross-sectional area of the grooves in the measurement unit.

5. The screw for the injection molding apparatus according to claim 1, further comprising a compression unit disposed between the supply unit and the measurement unit,
wherein the grooves in the compression unit are formed such that the grooves gradually shallow from the supply unit toward the measurement unit.

6. The screw for the injection molding apparatus according to claim 5, wherein the flight in the compression unit is formed such that a width thereof gradually narrows from the upstream side toward the downstream side.

7. The screw for the injection molding apparatus according to claim 5 or 6, wherein the flight in the compression unit is formed such that the pitch thereof gradually widens from the upstream side toward the downstream side.

8. The screw for the injection molding apparatus according to claim 7, wherein an angle between the flight from the supply unit to the measurement unit and a screw shaft orthogonal cross-section is set within a range of 16 to 26 degrees.

9. An injection molding apparatus, comprising:
a heated cylinder; and
a screw rotatably and protrudably-and-retractably housed in the heated cylinder,
wherein the screw is rotated to knead and plasticize a raw material received in a supply unit, and the screw is caused to protrude-and-retract to thereby inject the plasticized raw material from a measurement unit toward a mold,
wherein the screw comprises:
a shaft extending from the supply unit across to the measurement unit;
grooves formed continuously and spirally in the shaft; and
a flight having a rib-shape formed between the grooves that are adjacent to each other in an extension direction of the shaft,
wherein
a width of the flight in the supply unit is wider than a width of the flight in the measurement unit,
a pitch of the flight in the supply unit is smaller than a pitch of the flight in the measurement unit, and
a depth of the grooves in the supply unit is deeper than a depth of the grooves in the measurement unit.
